Europäisches Patentamt

**European Patent Office**

**Office européen des brevets**

(11) Numéro de publication: **0 189 715**
**A1**

# DEMANDE DE BREVET EUROPEEN

(21) Numéro de dépôt: 85402628.3

(22) Date de dépôt: 24.12.85

(51) Int. Cl.⁴ **F02M 69/08** , F02M 67/02 , F01L 3/06 , F02B 13/00

(30) Priorité: 28.12.84 FR 8420058

(43) Date de publication de la demande:
06.08.86 Bulletin 86/32

(84) Etats contractants désignés:
BE DE GB IT NL SE

(71) Demandeur: **INSTITUT FRANCAIS DU PETROLE**
**4, Avenue de Bois-Préau**
**F-92502 Rueil-Malmaison(FR)**
Demandeur: **AUTOMOBILES PEUGEOT**
**75, avenue de la Grande Armée**
**F-75116 Paris(FR)**
Demandeur: **AUTOMOBILES CITROEN**
**62 Boulevard Victor-Hugo**
**F-92200 Neuilly-sur-Seine(FR)**

(72) Inventeur: **Trapy, Jean**
**39, rue Grevel Duval**
**F-92500 Reuil Malmaison(FR)**

(74) Mandataire: **Aubel, Pierre et al**
**Institut Français du Pétrole Département Brevets 4,**
**avenue de Bois Préau**
**F-92502 Rueil-Malmaison(FR)**

(54) **Dispositif pour contrôler le jet de mélange carburé délivré par un système d'injection pneumatique.**

(57) Dispositif d'alimentation d'un moteur à combustion alternatif en mélange carburé.

Ce dispositif est caractérisé en ce que l'orifice d'injection (3) est équipé d'un organe déflecteur (5, 5a à 5d) du jet de mélange carburé délivré par le système d'injection pneumatique.

## FIG.1

EP 0 189 715 A1

## DISPOSITIF POUR CONTROLER LE JET DE MELANGE CARBURE DELIVRE PAR UN SYSTEME D'INJECTION PNEUMATIQUE.

La présente invention concerne un dispositif destiné à modeler la forme et la direction du jet de mélange carburé délivré par un injecteur pneumatique, alimentant un moteur alternatif à combustion interne.

Ces moteurs sont habituellement alimentés, soit par un carburateur, soit par injection directe ou indirecte du carburant liquide.

Dans le premier cas, le mélange préalable de l'air et du carburant s'effectue nettement en amont des orifices d'admission des cylindres, ce qui entraîne des inhomogénéités à la fois de la répartition du carburant dans l'air, et de la distribution du mélange entre les cylindres. Ces imperfections sont préjudiciables au rendement du moteur, d'autant plus que des pertes de mélanges à l'échappement peuvent avoir lieu lorsque le cylindre est balayé par le mélange admis (en particulier dans les moteurs 2 temps). Enfin, le dosage du carburant dans l'air devient fort délicat lorsqu'il est nécessaire d'optimiser la carburation dans le sens d'une économie d'énergie et d'une réduction des polluants.

L'injection directe ou indirecte du carburant liquide pallie les effets néfastes d'une mauvaise répartition entre cylindres et des pertes à l'échappement, et facilite le dosage du carburant. Elle a cependant pour inconvénient de créer des inhomogénéités du mélange dans les cylindres, qui peuvent occasionner de mauvaises combustions, en particulier à haut régime.

Un troisième procédé est encore peu ou pas utilisé dans les moteurs alternatifs, c'est l'injection pneumatique. Ce procédé allie les avantages de l'injection liquide directe ou indirecte, et ceux de la carburation. En effet, le fluide introduit est déjà un mélange carburé, et sa distribution peut être indépendante pour chaque cylindre, et déclenchée de manière à minimiser les pertes à l'échappement.

Il n'existe pas, selon l'art antérieur, de dispositif permettant de modeler un jet pénétrant dans une chambre de combustion dans laquelle existe déjà un certain mouvement par exemple tourbillonnaire de la charge contenue dans cette chambre. Des exemples de dispositifs permettant d'obtenir un mouvement tourbillonnaire d'ensemble de la charge sont décrits dans les brevets français FR-A--313.652 et FR-A-1.520.353, anglais GB-882.706 et américain US-A-1.866.703.

La présente invention permet de modeler le jet, produit par un injecteur pneumatique, pénétrant une chambre de combustion dans laquelle l'essentiel de la charge a été introduit par un moyen approprié distinct de l'injecteur pneumatique.

L'invention proposée concerne un déflecteur disposé à la sortie d'un injecteur pneumatique, et permettant de modifier à volonté la forme et la direction du jet de mélange carburé.

Ainsi, la présente invention concerne un dispositif pour contrôler le jet de mélange carburé délivré par un système d'injection pneumatique alimentant un moteur alternatif à combustion interne, ledit système d'injection pneumatique comportant un organe d'injection du carburant liquide débouchant dans une préchambre d'injection communiquant avec la chambre de combustion du moteur par l'intermédiaire d'un orifice d'injection équipé d'un organe d'obturation périodique, tel qu'une soupape d'injection. Ce dispositif est caractérisé en ce que l'orifice d'admission est équipé d'un organe déflecteur du jet de mélange carburé délivré par le système d'injection pneumatique.

Cet organe pourra être intégré ou adapté au siège de la soupape d'injection. Il pourra avoir une forme dont la paroi interne comporte une première portion s'évasant vers l'intérieur de la chambre de combustion du moteur, cette première portion de paroi se raccordant à une seconde portion sensiblement parallèle à l'axe de la soupape d'injection.

L'organe déflecteur pourra avoir une forme comportant une première portion de paroi interne s'évasant vers l'intérieur de la chambre de combustion du moteur, cette première portion de paroi se raccordant à une seconde portion de forme arrondie.

L'organe déflecteur pourra avoir une forme s'évasant vers l'intérieur de la chambre de combustion du moteur.

Enfin, l'organe déflecteur pourra avoir un axe incliné sur l'axe de l'orifice d'injection de façon à créer un jet d'admission dévié.

Pour bien comprendre cette invention dans ses particularités et avantages, on se reportera à la description qui suit, et qu'illustrent les figures annexées suivantes, parmi lesquelles :

- la figure 1 montre la coupe schématique d'un mode de réalisation du dispositif d'injection muni d'un déflecteur, et

- les figures 2A, 2B, 2C et 2D présentent quelques exemples de réalisation de déflecteurs.

Sur les figures, la référence 1 désigne la chambre de combustion d'un moteur à combustion interne alternatif dont la culasse 2 comporte un orifice d'injection 3 faisant communiquer une préchambre d'injection 4 avec la chambre 1.

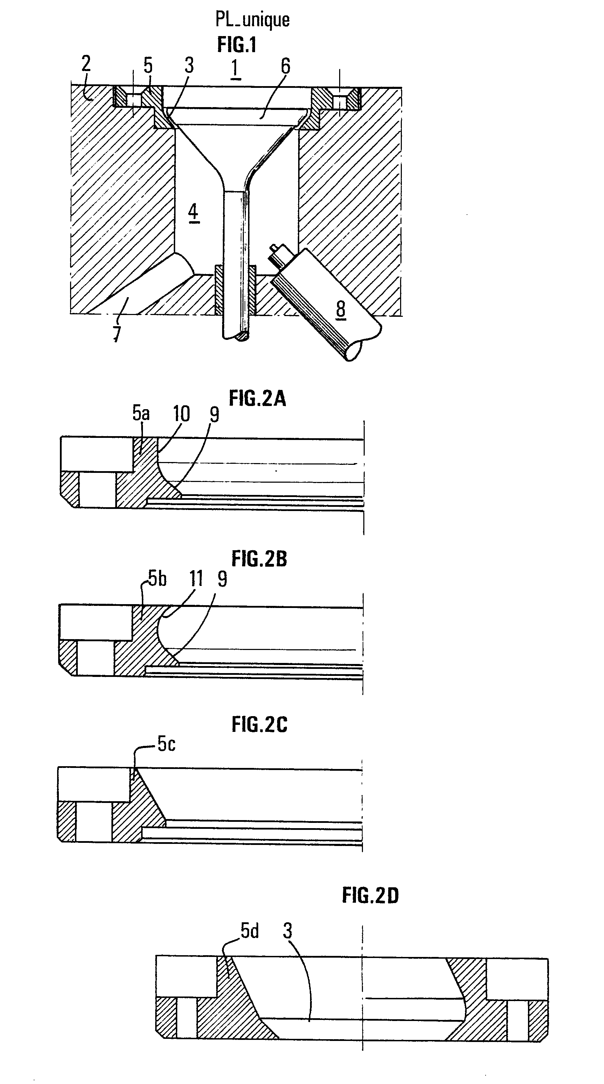

La figure 1 représente un schéma d'une réalisation d'injecteur pneumatique équipé d'un déflecteur. Ce déflecteur est référencé 5 et il vient se placer en embout à la sortie de l'injecteur, en étant intégré (ou non) au siège de la soupape d'injection 6, qui ferme la préchambre d'injection 4. Dans cette préchambre débouche une arrivée d'air sous pression 7, ainsi qu'un ou plusieurs injecteurs de carburant liquide 8 tels que, par exemple, ceux actuellement utilisés dans les moteurs à essence à injection. La soupape dont le mouvement est commandé par des systèmes classiques ou non, provoque, lors de sa levée, l'ouverture de l'injecteur et l'injection du mélange carburé, car il s'établit alors un flux d'air au travers de la préchambre 4, qui pulvérise le carburant et l'entraîne à l'extérieur. Le carburant liquide est introduit dans la préchambre avant et/ou pendant l'ouverture de la soupape. On ne sortirait pas du cadre de l'invention en remplaçant la soupape 6 par un autre type d'organe d'obturation périodique.

Les figures 2A, 2B, 2C et 2D montrent des modes de réalisation du déflecteur, et l'on a pu vérifier expérimentalement que la forme et la direction du jet étaient bien imposées par celle du déflecteur. Ainsi le déflecteur 5a de la figure 2A comporte une première portion de paroi 9 qui s'évase vers l'intérieur de la chambre 1, cette première portion de paroi se raccordant à une seconde portion sensiblement parallèle à l'axe de la soupape 6, de façon à créer un jet droit. Le déflecteur 5b (Fig. 2B) comporte également une portion de paroi divergente 9, mais celle-ci se raccorde à une seconde portion de paroi 11 qui est de forme arrondie, de façon à créer un jet qui se contracte, ce qui assure au jet une pénétration plus profonde dans la chambre 1 et est donc avantageux pour les chambres de grande dimension. Le déflecteur 5c de la figure 2C crée un jet qui s'évase, et le déflecteur 5d (Fig. 2D) crée un jet dévié dans le sens indiqué par la flèche.

Le mode de réalisation illustré par la figure 2C est avantageux pour les chambres de petites dimensions, car il évite une pénétration trop profonde du jet et favorise son mélange avec l'air ambiant.

Le mode de réalisation de la figure 2D, dans lequel l'axe du déflecteur est incliné sur celui de l'orifice d'injection, peut être utilisé pour donner au jet une orientation l'écartant de l'orifice ou des orifices d'échappement, ce qui améliore la rétention du mélange carburé dans la chambre 1. Ce mode de réalisation est particulièrement avantageux dans les moteurs deux temps comportant des lumières d'échappement.

**Revendications**

1.- Dispositif pour contrôler le jet de mélange carburé délivré par un système d'injection pneumatique alimentant un moteur alternatif à combustion interne, ledit système d'injection pneumatique comportant un organe d'injection du carburant liquide débouchant dans une préchambre d'injection communiquant avec la chambre de combustion du moteur par l'intermédiaire d'un orifice d'injection équipé d'un organe d'obturation périodique, tel qu'une soupape d'injection, caractérisé en ce que ledit orifice d'admission - (3) est équipé d'un organe déflecteur (5, 5a à 5d) du jet de mélange carburé délivré par le système d'injection pneumatique (8).

2.- Dispositif selon la revendication 1, caractérisé en ce que ledit organe déflecteur (5, Fig. 1) est adapté ou fait partie intégrante du siège de la soupape d'injection.

3.- Dispositif selon l'une quelconque des revendications 1 et 2, caractérisé en ce que ledit organe déflecteur a une forme dont la paroi interne comporte une première portion - (9) s'évasant vers l'intérieur de la chambre de combustion - (1) du moteur, cette première portion (9) de paroi se raccordant à une seconde portion (10) sensiblement parallèle à l'axe de la soupape d'injection (6).

4.- Dispositif selon l'une quelconque des revendications 1 et 2, caractérisé en ce que ledit organe déflecteur a une forme comportant une première portion de paroi interne (9) s'évasant vers l'intérieur de la chambre de combustion du moteur, cette première portion de paroi se raccordant à une seconde portion (11) de forme arrondie.

5.- Dispositif selon l'une quelconque des revendications 1 et 2, caractérisé en ce que ledit organe déflecteur (5c, Fig.2C) a une forme s'évasant vers l'intérieur de la chambre de combustion (1) du moteur.

6.- Dispositif selon la revendication 5, caractérisé en ce que ledit déflecteur a un axe incliné sur l'axe de l'orifice d'injection de façon à créer un jet d'admission dévié.

0 189 715

PL_unique

**FIG.1**

**FIG.2A**

**FIG.2B**

**FIG.2C**

**FIG.2D**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-C- 359 399 (F. MÄDLER) <br> * Page 2, ligne 50 - page 3, ligne 47; figures 1-4 * | 1,2,4 | F 02 M 69/08 <br> F 02 M 67/02 <br> F 01 L 3/06 <br> F 02 B 13/00 |
| X | FR-A- 901 122 (SOC. DE PROSPECTION INDUSTRIELLE) <br> * Page 1, ligne 59 - page 2, lgne 43; page 2, lignes 75-77; figures 1,3 * | ·1,2,5 | |
| X | CH-A- 270 337 (S.A. DES USINES CHAUSSON) <br> * Page 1, ligne 58 - page 3, ligne 43; figures 1-3 * | 1,2 | |
| Y | FR-E- 313 652 (LIET) <br> * En entier * | 1-6 | |
| | | | DOMAINES TECHNIQUES RECHERCHES (Int. Cl.4) |
| Y,D. | FR-A-1 520 353 (D. RABOUYT) <br> * Page 3, colonne de gauche, dernier paragraphe - colonne de droite, avant-dernier paragraphe; figures 27,30,32 * | 1,3-5 | F 02 M <br> F 01 L <br> F 02 B |
| Y,D | GB-A- 882 706 (LEYLAND) <br> * En entier * | 1,2,6 | |
| Y,D | US-A-1 866 703 (H.A. GEHRES) <br> * Page 1, ligne 89 - page 2, ligne 93; figures 1-4 * | 1,2,6 | |

Le present rapport de recherche a été établi pour toutes les revendications

| Lieu de la recherche <br> LA HAYE | Date d'achèvement de la recherche <br> 02-04-1986 | Examinateur <br> FRIDEN C.M. |
|---|---|---|